# EUROPÄISCHE PATENTANMELDUNG

(11) **EP 0 728 827 A1**
(43) Veröffentlichungstag der Anmeldung: **28.08.1996**
(21) Anmeldenummer: 96101882.7
(22) Anmeldetag: 09.02.1996
(51) Int. Cl.: C09K 11/06, C08G 65/40, C08G 63/547, C08G 64/04, C08G 18/67

(54) **Polymere mit Distyrylbenzoleinheiten und deren Verwendung**

(30) Priorität: 22.02.1995 DE 19506043
(71) Anmelder: BAYER AG, 51368 Leverkusen (DE)
(72) Erfinder: Wehrmann, Rolf, Dr., D-47800 Krefeld (DE); Dujardin, Ralf, Dr., D-47877 Willich (DE); Elschner, Andreas, Dr., D-45479 Mülheim (DE)

(57) **Zusammenfassung**

Die Erfindung betrifft Polymere mit Distyrylbenzoleinheiten und deren Verwendung bei der Herstellung von elektrolumineszierenden Gegenständen.

## Beschreibung

Die Erfindung betrifft Polymere mit Distyrylbenzoleinheiten und deren Verwendung bei der Herstellung von elektrolumineszierenden Gegenständen.

Polymere mit Distyrylbenzoleinheiten sind bekannt (z.B. A. Greiner, Macromol. Symp. 77, 315-324 (1994), F. E. Karasz et al, Macromolecules 1993, 26, 1188). Diese Systeme haben Distyrylbenzoleinheiten, die z.B. durch lineare aliphatische Segmente miteinander verbunden sind.

Die vorliegende Erfindung betrifft Polymere und/oder Copolymere, die wiederkehrende Einheiten der Formel (I) enthalten 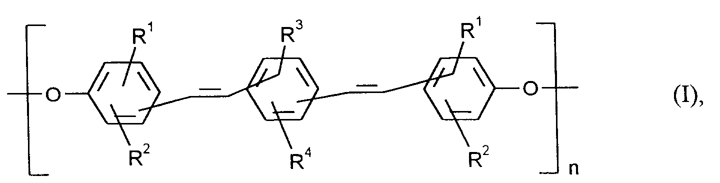
wobei diese Einheiten verknüpft sind über Ester-, Ether-, Carbonat- oder Urethangruppen, und
R¹ bis R⁴ gleich oder verschieden sind und für Halogen, vorzugsweise Fluor, Chlor und Brom sowie Wasserstoff, C₁₋₃₀-Alkyl, C₆₋₁₈-Aryl, C₆₋₂₄-Aralkyl, C₆₋₂₄-Aryloxy-S-C₁₋₃₀-Alkyl, -NH-C₁₋₃₀-Alkyl, N-C₁₋₃₀-Dialkyl, NO₂, CN stehen und zusätzlich R¹ und R² unabhängig voneinander für C₂-C₃₀-Alkoxy, R³ und R⁴ für C₁-C₃₀-Alkoxy stehen können und
n für eine Zahl von 1 bis 500 steht.

Beispiele für derartige Struktureinheiten sind solche der Formel (II) 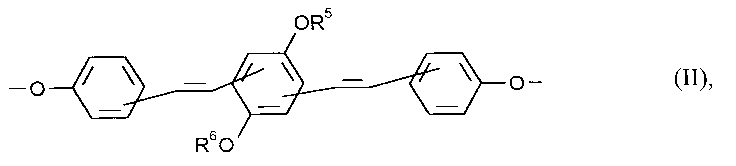
in welcher
- R⁵ und R⁶: unabhängig voneinander für Methyl, Ethyl, (i)Propyl, (i)Butyl, (i)Pentyl, (i)Hexyl, (i)Heptyl, (i)Octyl, 2-Ethylhexyl, (i)Decyl, (i)Dodecyl, Myristyl, Cetyl, Stearyl, Phenyl, Benzyl, C₁-C₃₀-Alkylphenyl stehen,
solche der Formel (III) 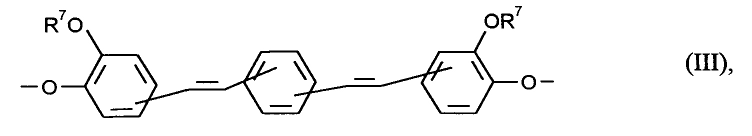
in welcher
- R⁷: für Methyl, Ethyl, (i)Propyl, (i)Butyl, (i)Pentyl, (i)Hexyl, (i)Heptyl, 2-Ethylhexyl, (i)Octyl, (i)Decyl, (i)Dodecyl, Myristyl, Cetyl, Stearyl, Phenyl, Benzyl, C₁-C₃₀-Alkylphenyl steht,
solche der Formel (IV) 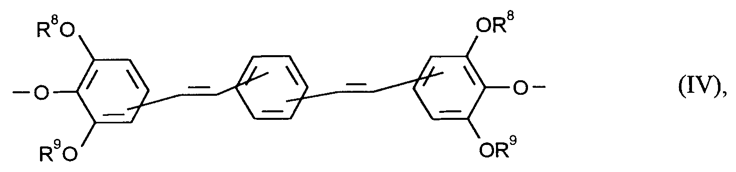
- R⁸ und R⁹: unabhängig voneinander für Ethyl, (i)Propyl, (i)Butyl, (i)Pentyl, (i)Hexyl, (i)Heptyl, 2-Ethylhexyl, (i)Octyl, (i)Decyl, (i)Dodecyl, Myristyl, Cetyl, Stearyl, Phenyl, Benzyl, C₁-C₃₀-Alkylphenyl stehen,
solche der Formel (V) 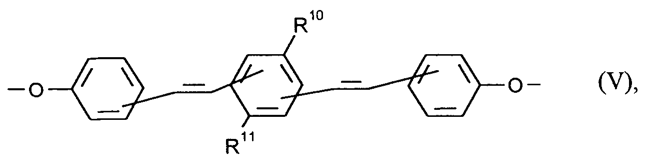
in welcher
- R¹⁰ und R¹¹: unabhängig voneinander für Wasserstoff, Methyl, Ethyl, (i)Propyl, (i)Butyl, (i)Pentyl, (i)Hexyl, (i)Heptyl, 2-Ethylhexyl, (i)Octyl, (i)Decyl, (i)Dodecyl, Myristyl, Cetyl, Stearyl, Phenyl, Benzyl, C₁-C₃₀-Alkylphenyl stehen,
solche der Formel (VI) 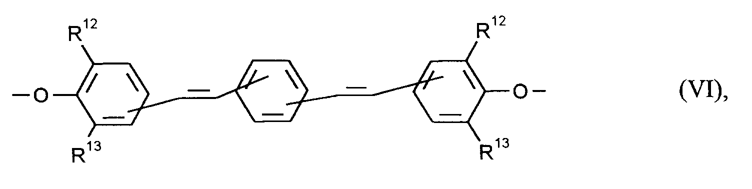
in welcher
- R¹² und R¹³: unabhängig voneinander für Wasserstoff, Methyl, Ethyl, (i)Propyl, (i)Butyl, (i)Pentyl, (i)Hexyl, (i)Heptyl, 2-Ethylhexyl, (i)Octyl, (i)Decyl, (i)Dodecyl, Myristyl, Cetyl, Stearyl, Phenyl, Benzyl, C₁-C₃₀-Alkylphenyl stehen,

Polymere im Sinne der Erfindung sind Produkte, die Distyrylbenzoleinheiten der Formel (I) enthalten wie z.B. Polycarbonate, Polyethersulfone, Polyetherethersulfone, Polycyanoarylether, Polyetherketone, Polyetheretherketone, Polyester, Polyether oder Polyurethane. Diese Polymere weisen Molekulargewichte im Bereich von 2 500 g/Mol bis 100 000 g/Mol - bestimmt durch GPC - auf.

Diese Polymeren werden aus Distyrylderivaten nach gängigen Methoden hergestellt.

So können Polyester durch Kondensation in Lösung, in heterogener Phase oder in der Schmelze gewonnen werden. Als Reaktionspartner für die Distyrylverbindungen der Formel (I) kommen Carbonsäuren oder deren Derivate zum Einsatz.

Polyether werden üblicherweise in Lösung aus Dihalogenverbindungen und den Distyrylverbindungen der Formel (I) durch Zugabe von Basen erhalten. Polycarbonate sind in der Schmelze oder in Phasengrenzflächenreaktionen aus Diphenylcarbonat bzw. Phosgen und den Distyrylverbindungen der Formel (I) herstellbar. Die Verfahren sind unter den entsprechenden Stichworten in "Encyclopedia of Polymer Science and Engineering", Second Edition, John Wiley & Sons oder Houben-Weyl, "Methoden der Organischen Chemie", Vierte Auflage, detailliert beschrieben.

Copolymere der oben genannten Klassen enthalten neben den Distyrylbenzoleinheiten weitere Co-Bausteine der Formeln (VII) und (VIII) 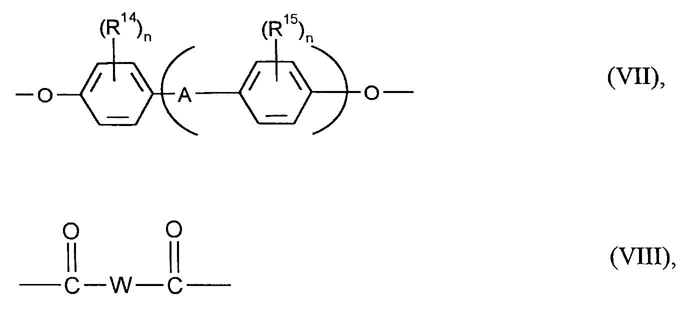
worin
- R¹⁴ und R¹⁵: gleich oder verschieden sind und für Halogen, vorzugsweise Fluor, Chlor und Brom sowie Wasserstoff, C₁₋₄-Alkyl, vorzugsweise Methyl und Ethyl, C₆₋₁₂-Aryl, vorzugsweise Phenyl und Biphenyl oder C₇₋₁₂-Aralkyl, vorzugsweise Methylphenyl und Ethylphenyl, stehen
- A: für eine chemische Bindung, CO, O, S, SO₂ und
einen Rest der Formel (IX) oder (X) 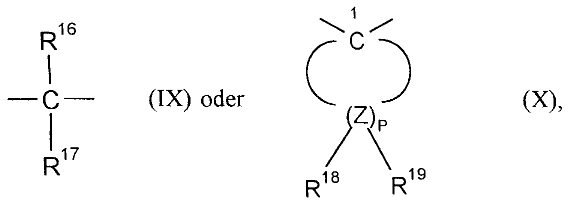
worin
- R¹⁶ und R¹⁷: gleich oder verschieden sind und für Halogen bevorzugt Fluor, Chlor und Brom sowie Wasserstoff, C₁-C₄-Alkyl, bevorzugt Methyl und Ethyl, oder C₅-C₁₂-Cycloalkyl mit gegebenenfalls einem oder mehreren Alkylsubstituenten wie Cyclopentyl, Cyclohexyl, Methylcyclopentyl und Methylcyclohexyl stehen,
- P: eine ganze Zahl von 4 bis 7, bevorzugt 4 oder 5 ist,
- R¹⁸ und R¹⁹: für jedes Z individuell wählbar sind und unabhängig voneinander Wasserstoff oder C₁-C₆-Alkyl, bevorzugt H oder Methyl, bedeuten und
- Z: Kohlenstoff bedeutet,
mit der Maßgabe, daß an mindestens einem Atom Z die Reste R¹⁸ und R¹⁹ gleichzeitig Alkyl sind,
- n: 0 oder eine ganze Zahl von 1 bis 4, vorzugsweise 0, 1 oder 2,
- m: 0 oder eine ganze Zahl von 1 bis 3, vorzugsweise 0, 1 oder 2, besonders bevorzugt 0 oder 1, bedeuten,
und
- W: für C₆₋₄₀-Alkyl
stehen.

Geeignete Diphenole der Formel (VII) sind z.B.:
Hydrochinon,
Methylhydrochinon,
Phenylhydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
a,a'-Bis-(hydroxyphenyl)-diisopropylbenzole
sowie deren C₁-C₆-kernalkylierte und kern(F,Cl,Br)halogenierte Verbindungen.

Diese und weitere geeignete andere Diphenole sind z.B. in den US-A 3 028 365, 2 999 835, 3 148 172, 2 069 560, 3 275 601, 2 991 273, 3 271 367, 3 062 781, 2 970 131, 2 069 573 und 2 999 846, in der DE-A 1 570 703, 2 063 050, 2 063 052, 2 211 095 und 3 832 936, der FR-A 1 561 518, der JP-A 62 093/86, 62 040/86 und 105 550/86 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
a,a'-Bis-(4-hydroxyphenyl)-p-diisopropylbenzol,
2,2-Bis-(3-methyl-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
a,a'-Bis-(3,5-dimethyl-4-hydroxyphenyl)-p-diisopropylbenzol,
2,2-Bis-(3,5-dichlor-4-hydroxyphenyl)-propan,
2,2,-Bis-(3,5-dibrom-4-hydroxyphenyl)-propan,
2,2,-Bis-(4-hydroxyphenyl)-propan,
2,2-Bis-(3,5-dimethyl-4-hydroxyphenyl)-propan
2,2-Bis-(3,5-dichlor-4-hydroxyphenyl)-propan,
2,2-Bis-(3,5 dibrom-4-hydroxyphenyl)-propan,
1,1,-Bis-(4-hydroxyphenyl)-cyclohexan,
4,4'-Dihydroxydiphenylsulfon,
1,6-,1,7-2,6-2,7-Naphthalindiol,
4,4'-Dihydroxydiphenylsulfon und
4,4'-Dihydroxybenzophenon.

Als weitere Bisphenolkomponenten bei der Herstellung der Estergruppen enthaltenden aromatischen Polyether sind
3,3,5-Trimethyl-1,1-bis-(4-hydroxyphenyl)-cyclohexan,
3,3,5-Trimethyl-1,1-bis(4-hydroxy-3,5-dimethylphenyl)-cyclohexan,
3,3,5,5-Tetramethyl-1,1-bis-(4-hydroxyphenyl)-cyclohexan,
3,3,5,5-Tetramethyl-1,1-bis-(4-hydroxy-2,5-dimethylphenyl)-cyclohexan,
3,3,5-Trimethyl-1,1-bis-(4-hydroxyphenyl)-cyclopentan und
3,3,5-Trimethyl-1,1-bis-(4-hydroxy-3,5-dimethylphenyl)-cyclopentan
geeignet.

Das Segment der Formel (VIII) leitet sich von einer Dicarbonsäure ab. Bei dem Rest W kann es sich um einen cycloaliphatischen, gegebenenfalls mehrkernigen C₆-C₃₀-aromatischen oder C₇-C₄₀-araliphatischen Rest handeln. Der Rest W kann auch ungesättigt sein. Beispiele sind Cyclohexandicarbonsäure, Phthalsäure, Isophthalsäure, Terephthalsäure, Maleinsäure, Fumarsäure, 3,5-Toluoldicarbonsäure, 2,4-Toluoldicarbonsäure, 2,5-Toluoldicarbonsäure, Naphthalindicarbonsäuren.

### Beispiele für Polymere und Copolymere:

### A) Polycarbonate

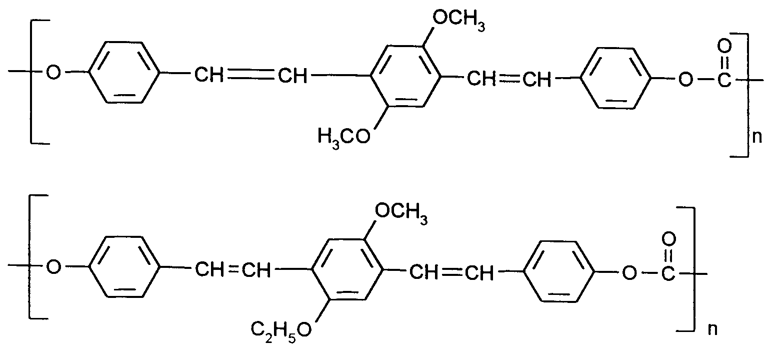

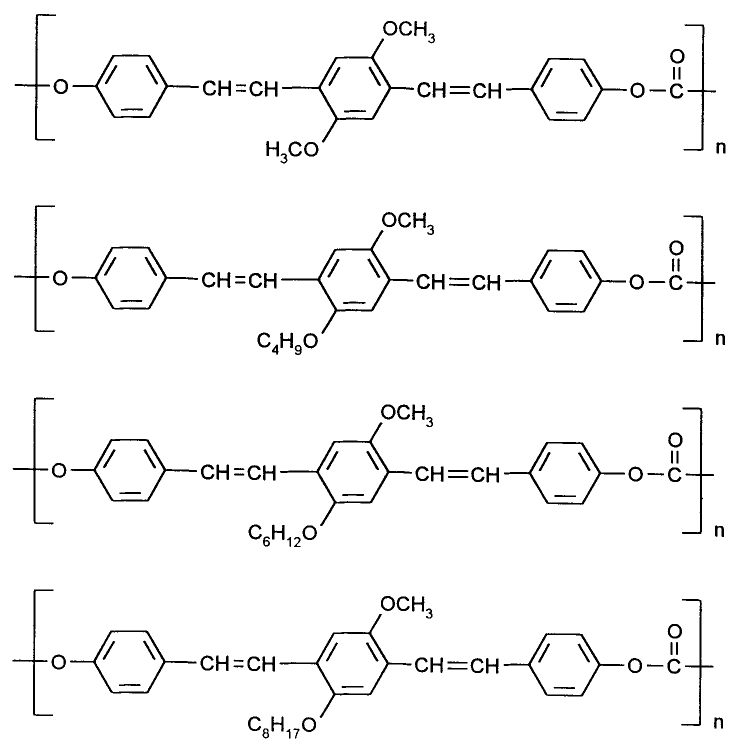

### B)Copolycarbonate(x + y) = z

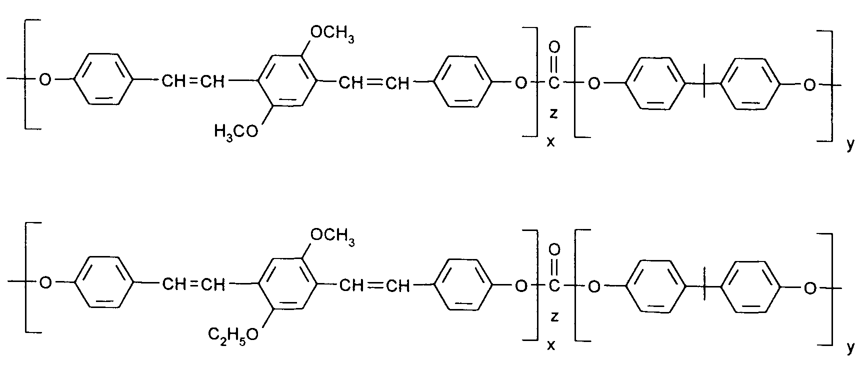

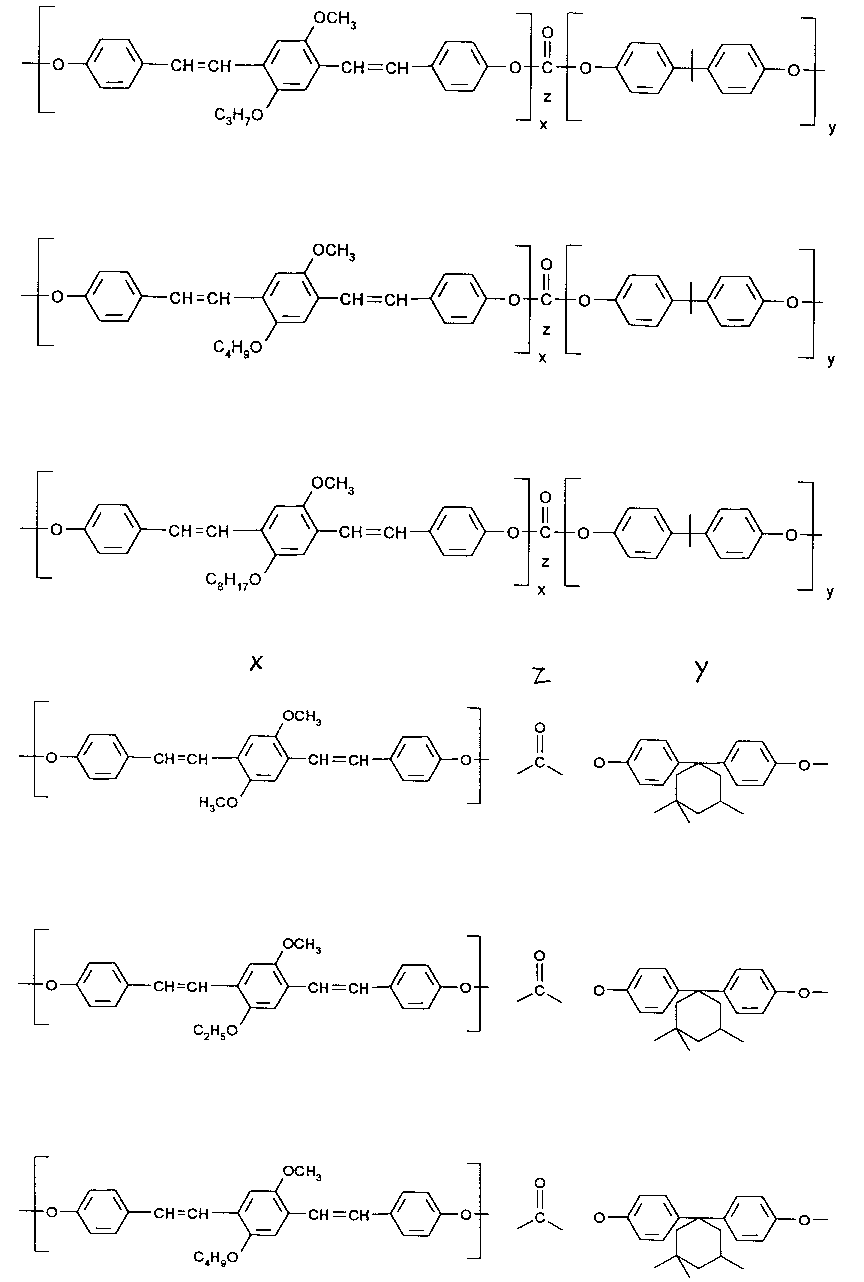

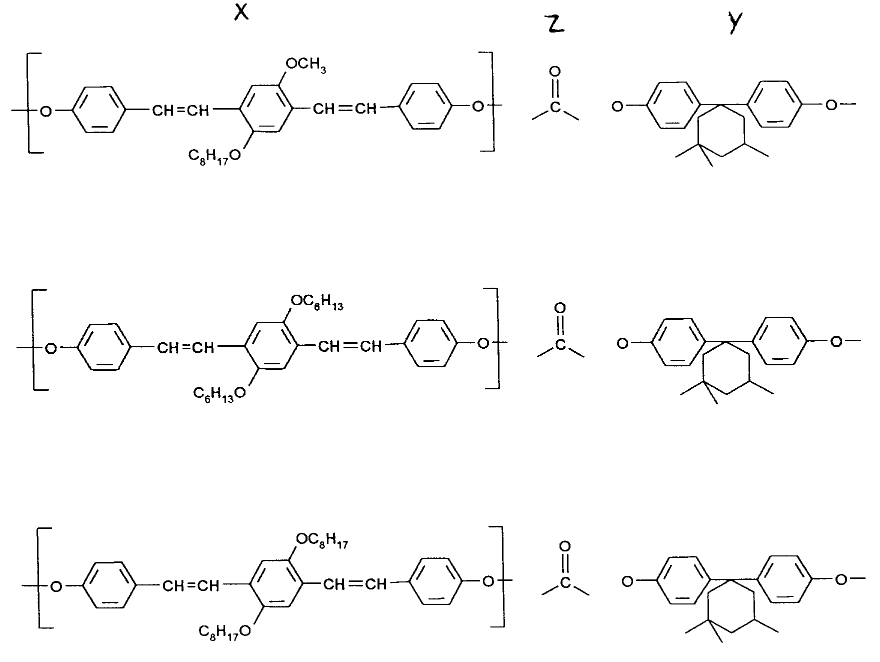

mit x + y = z

### C) Polysulfone

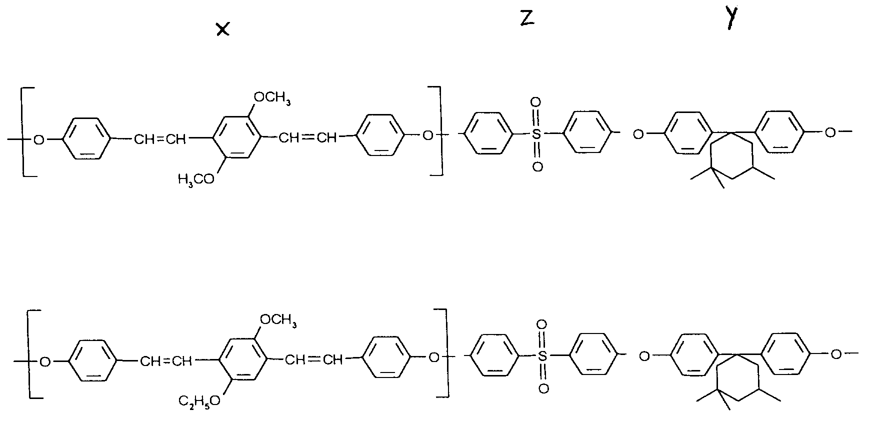

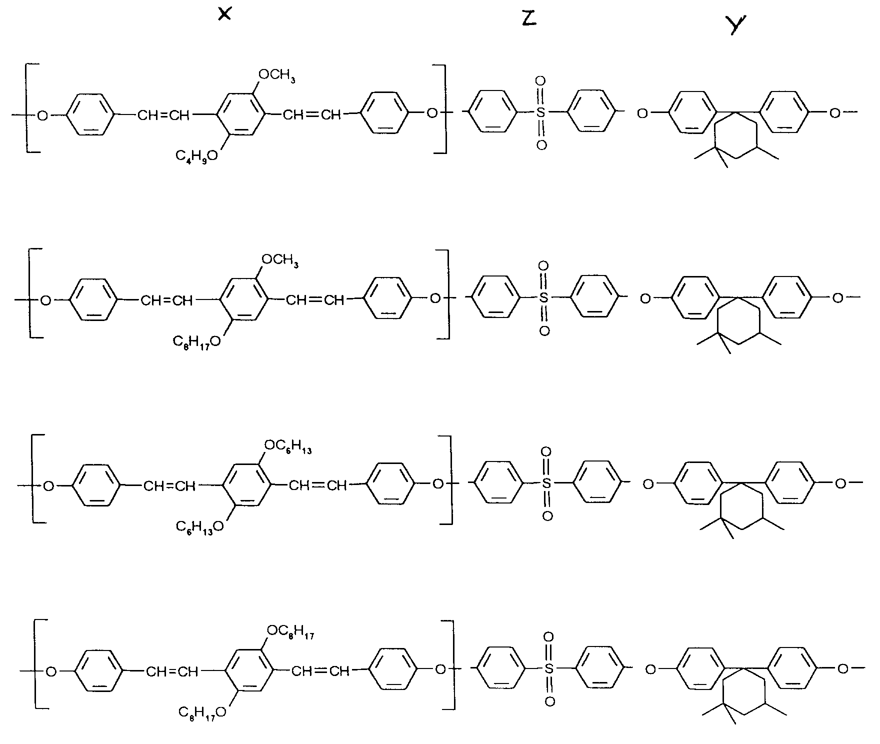

### D) Polycyanarylether

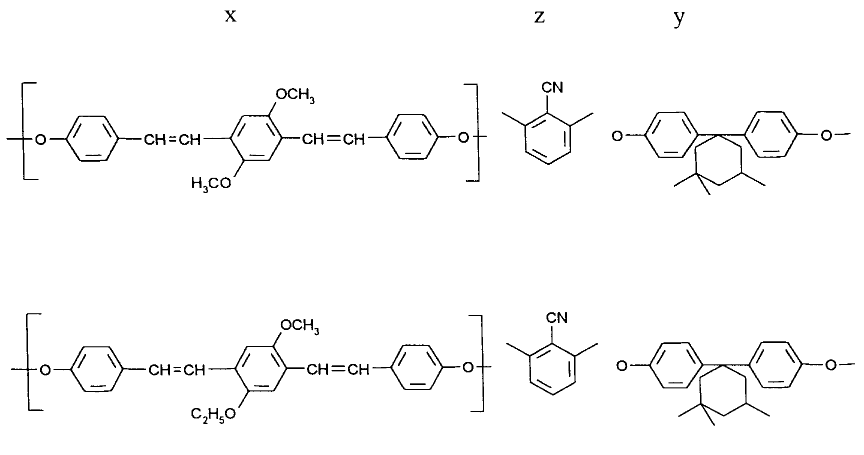

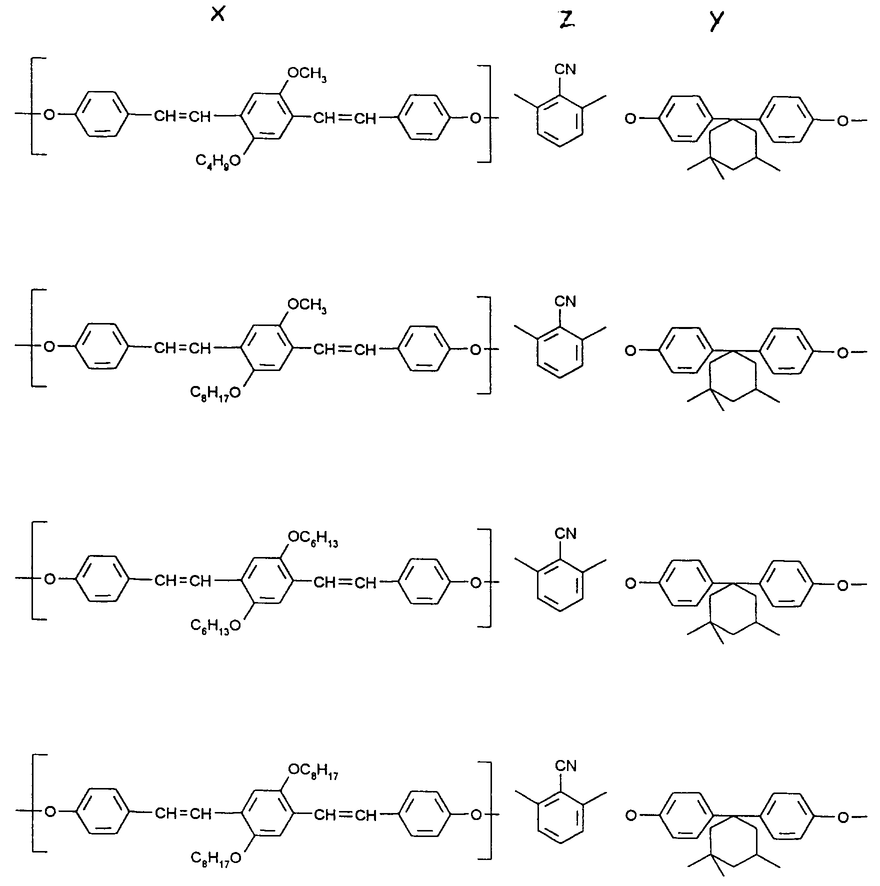

### E) Polyester

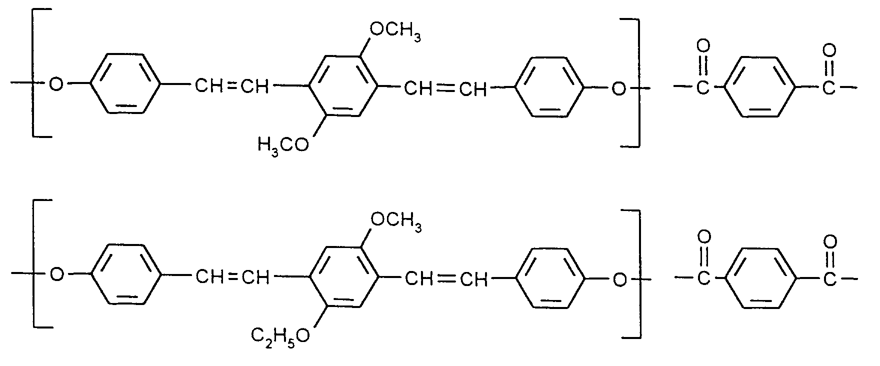

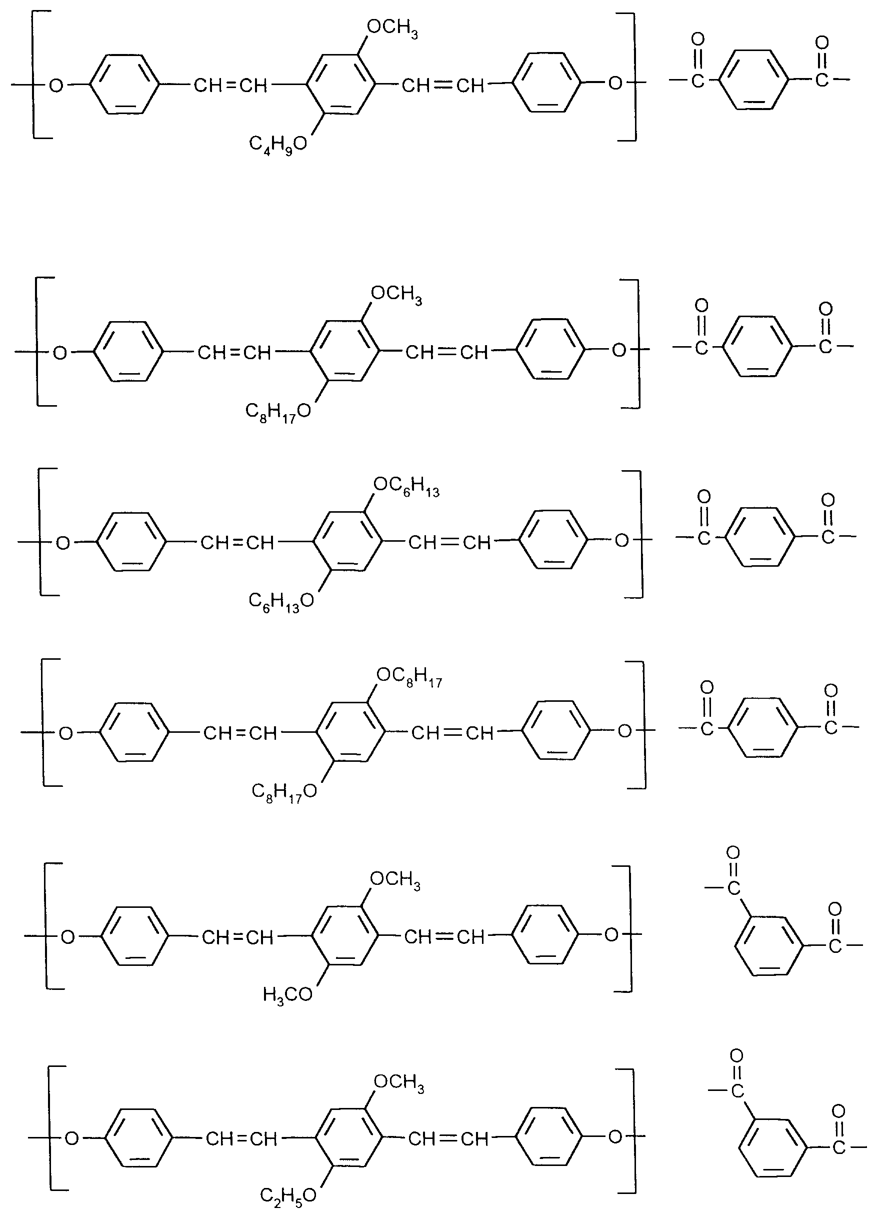

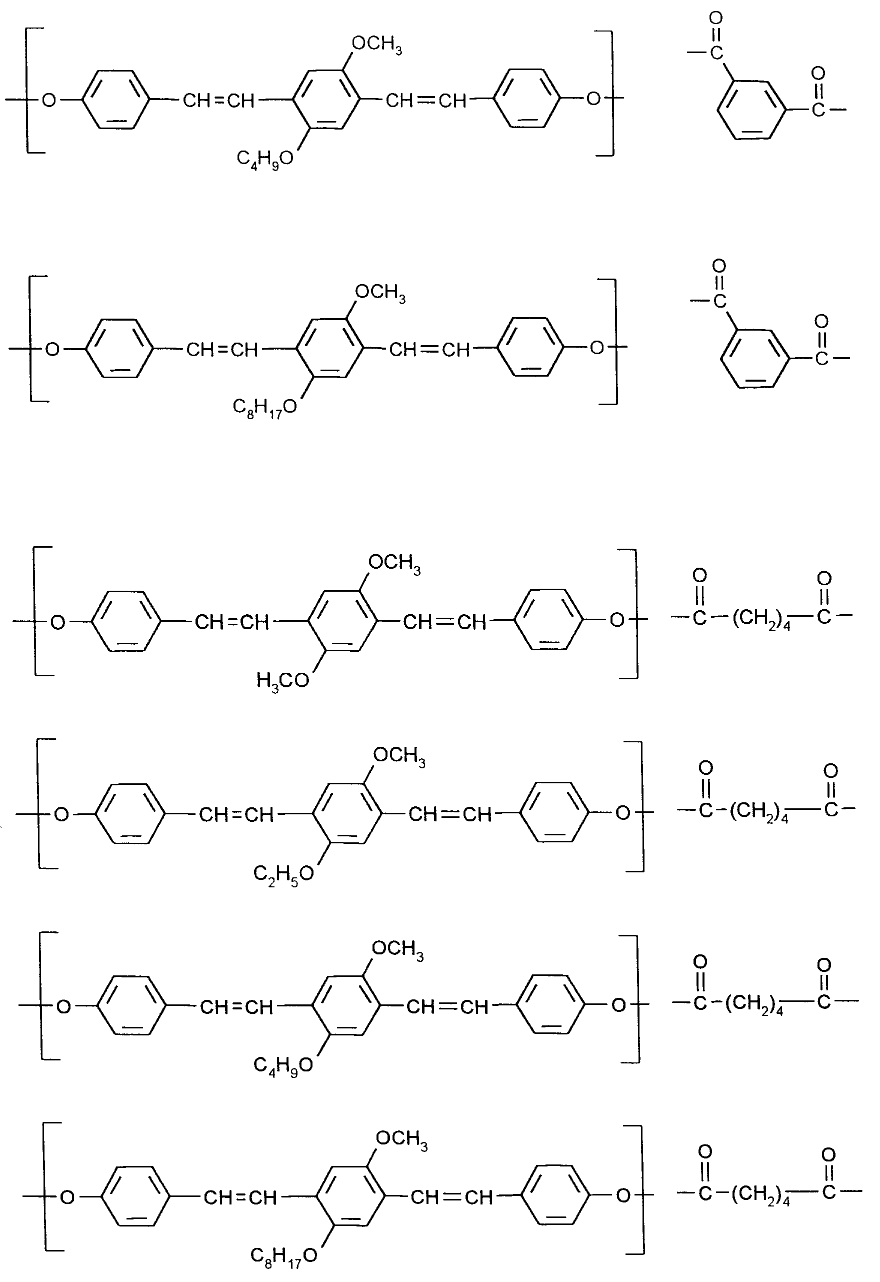

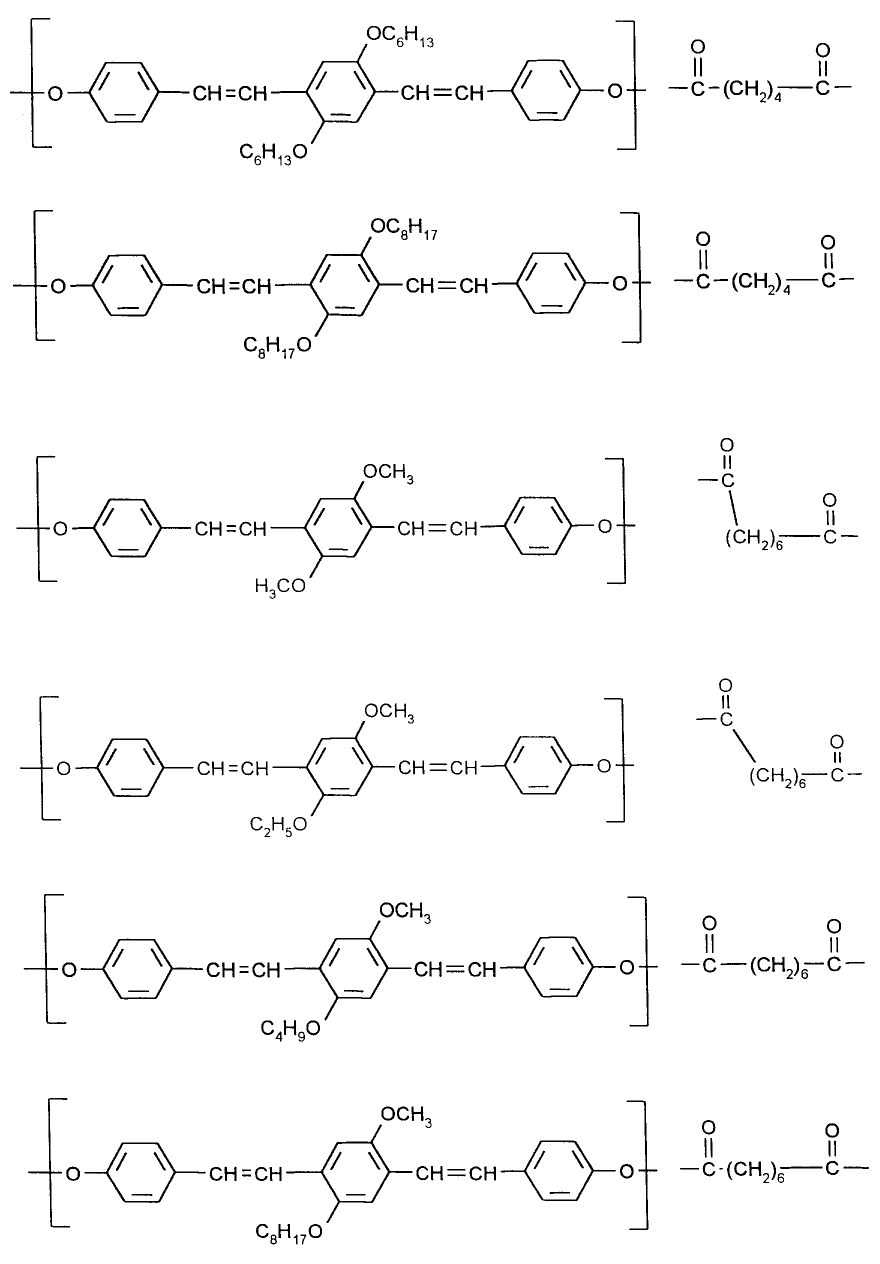

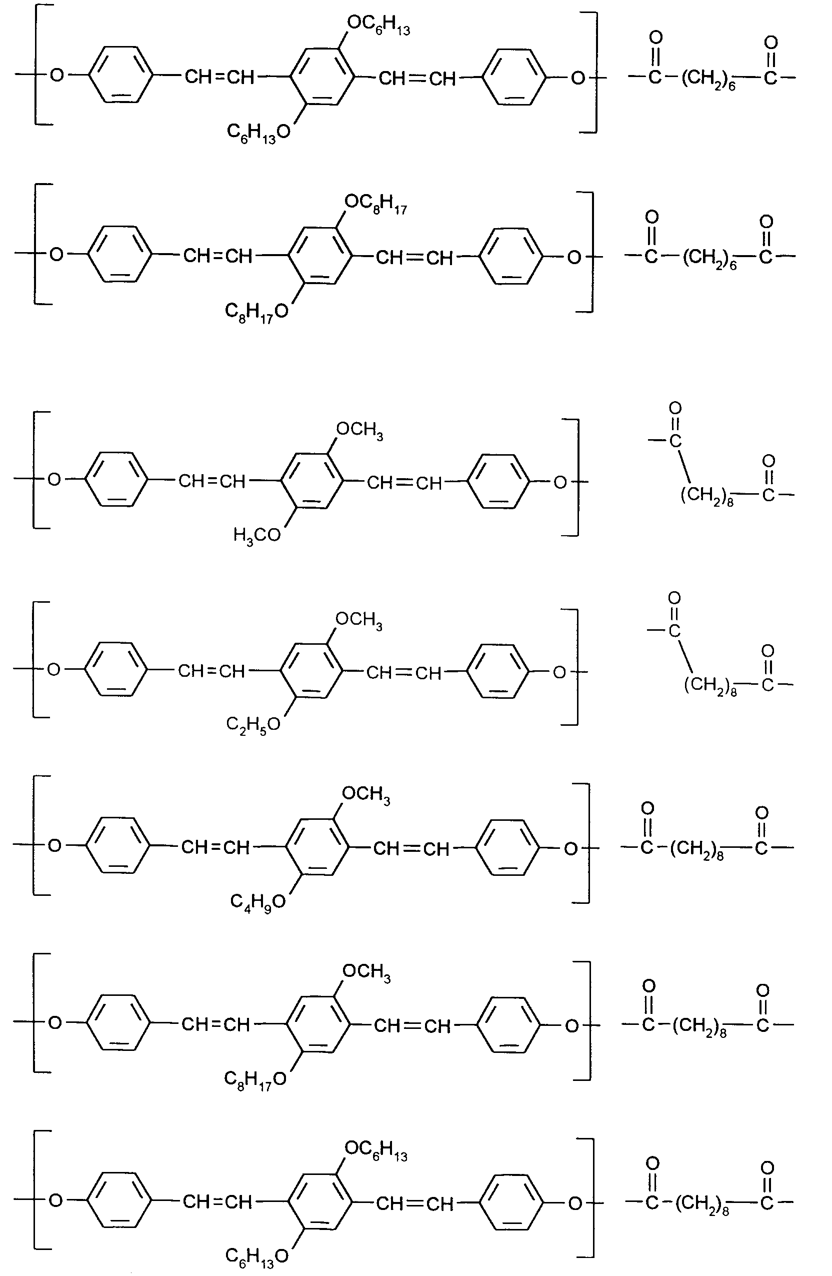

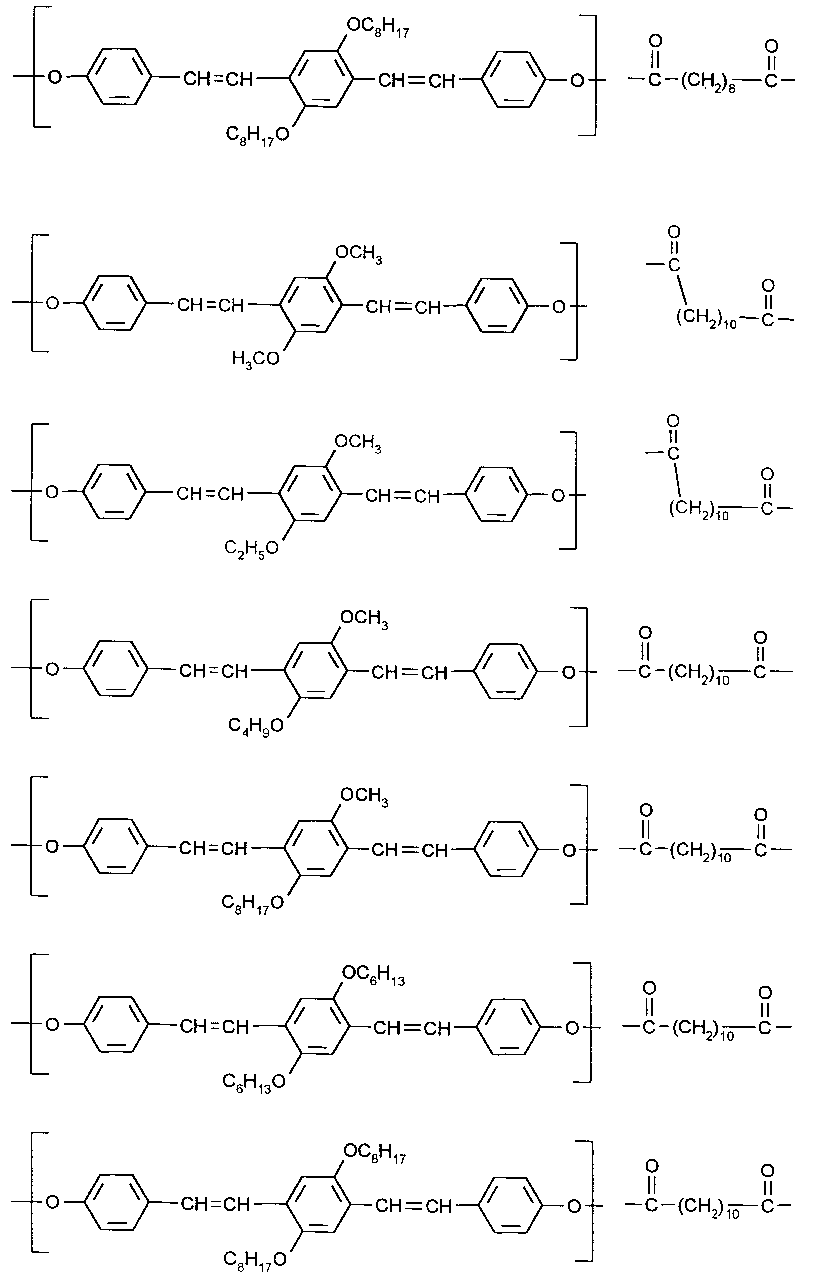

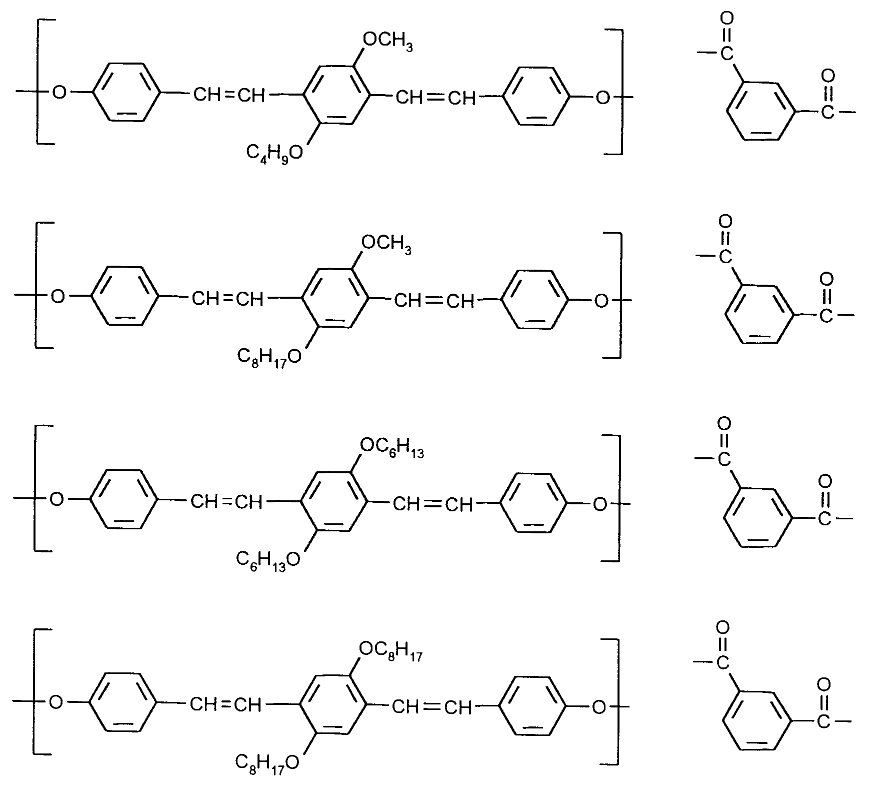

### F) Polyether

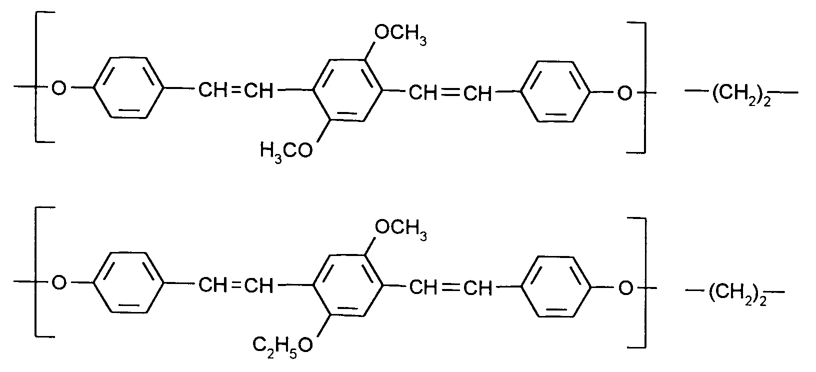

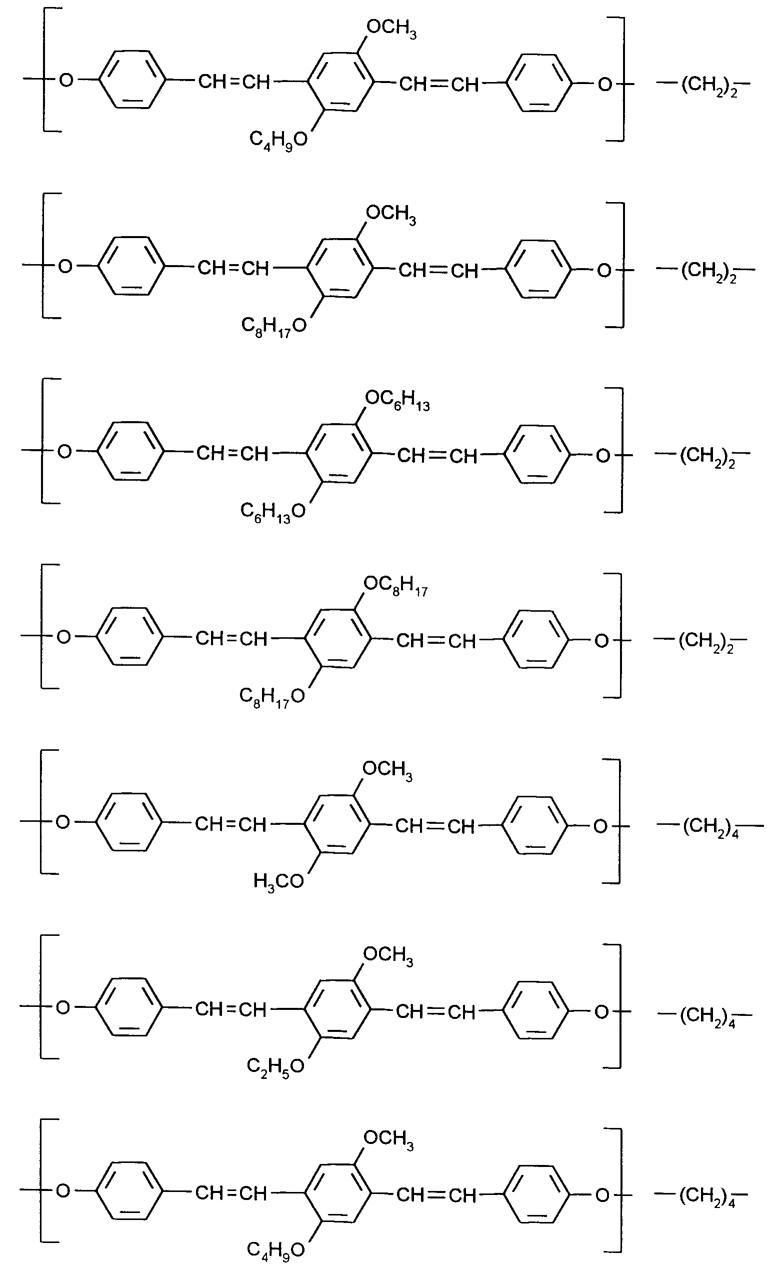

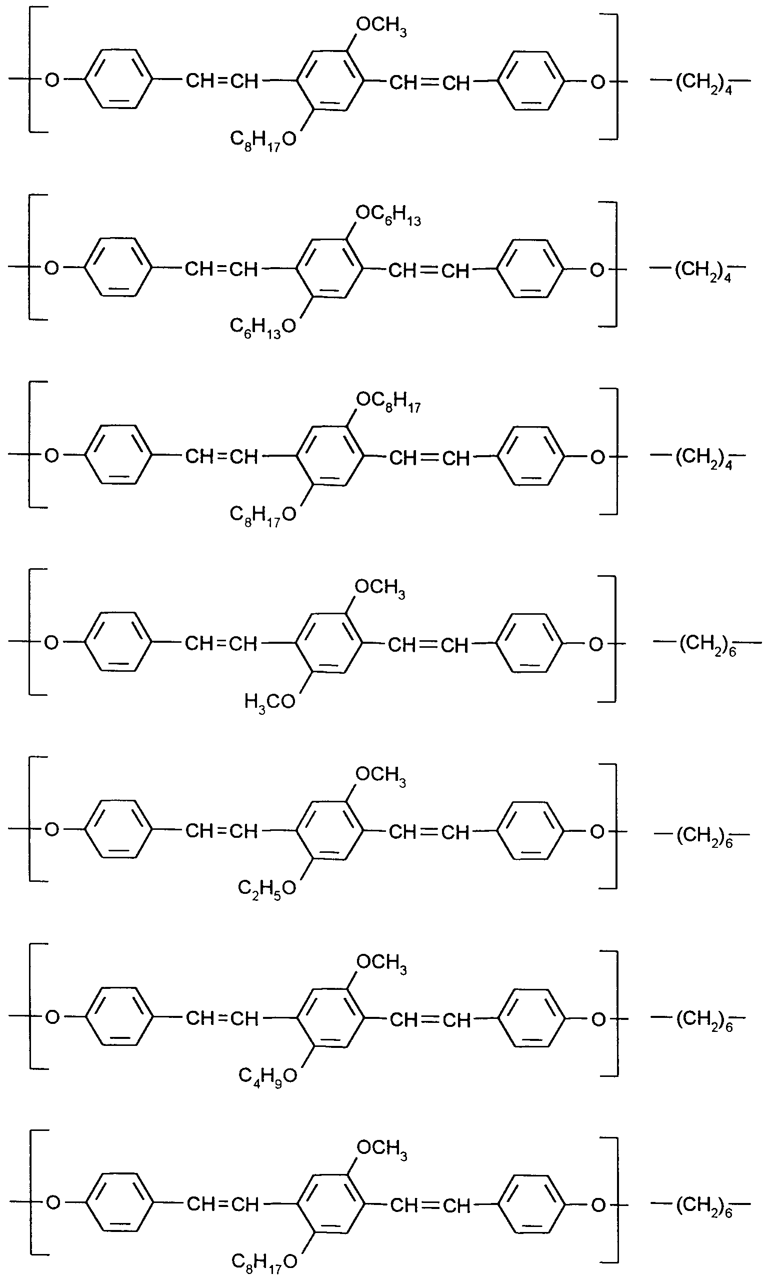

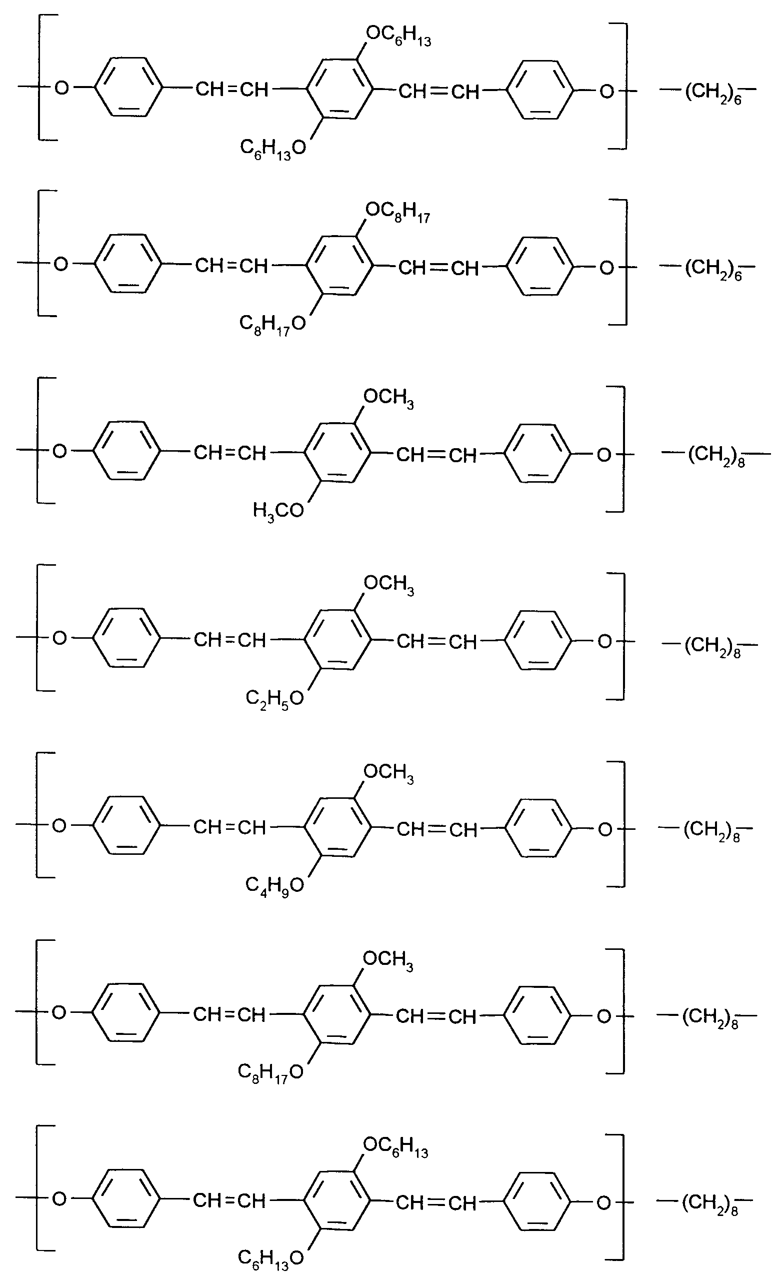

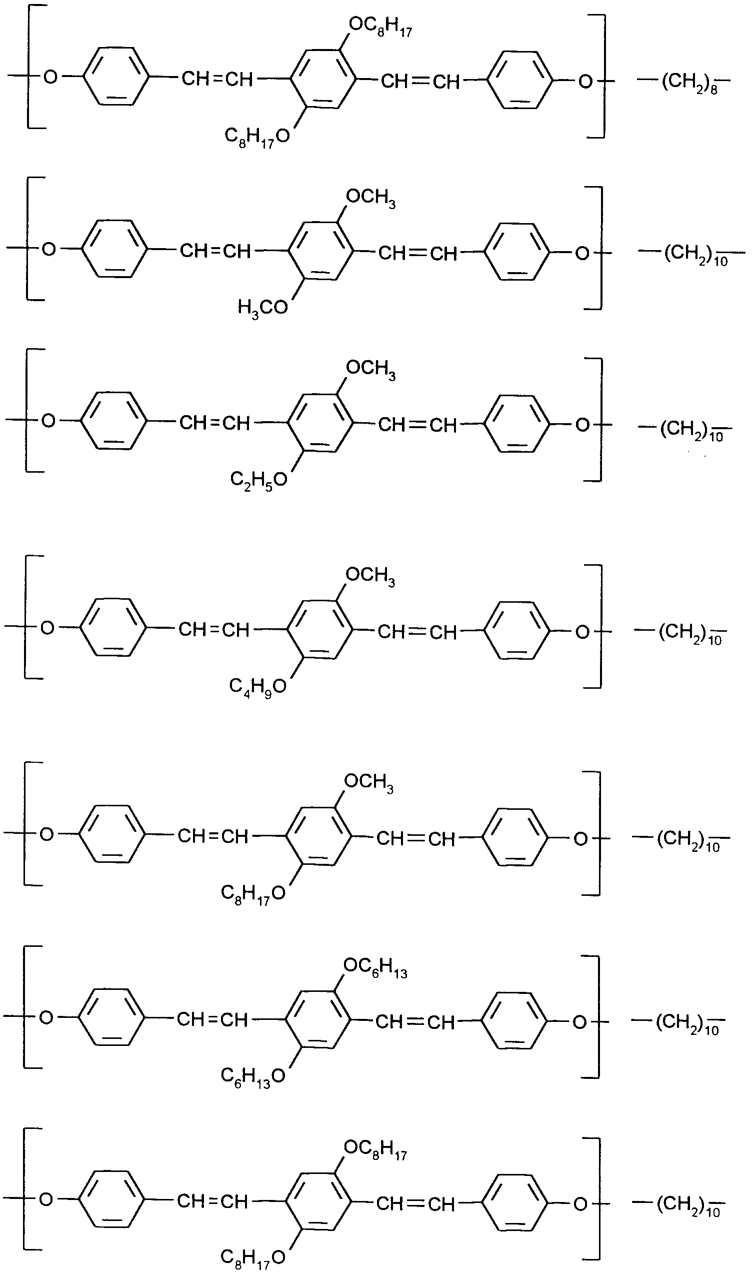

Polymere bzw. Copolymere der beschriebenen Art zeichnen sich durch ihre lumineszierenden Eigenschaften aus. Lösungen und Filme der Produkte zeigen starke Photolumineszenz bei Bestrahlung. Die Polymeren sind auch zum Aufbau von elektrolumineszierenden Anzeigen geeignet.

Sie lassen sich z.B. aus Lösung oder durch Extrusion zu Folien verarbeiten.

Bei den erfindungsgemäßen Systemen befindet sich die elektrolumineszierende (EL) Schicht zwischen zwei Elektroden. Mindestens eine der beiden Elektroden ist im sichtbaren Spektralbereich (ca. 200 bis 2.000 nm) transparent.

Eine transparente Elektrode wird auf einen transparenten Träger, z.B. Glas, Kunststoffmaterial (z.B. PET-Folie), aufgebracht. Als transparente Elektrode (R) sind geeignet
a) Metalloxide, z.B. Indium-Zinn-Oxid (ITO), Zinnoxid (NESA), etc.,
b) semi-transparente Metallfilme, z.B. Au, Pt, Ag, Cu etc.,
c) leitfähige Polymerfilme wie Polyaniline, Polythiophene, etc.

Die Metalloxid- und die semitransparenten Metallfilmelektroden werden durch Techniken wie Aufdampfen, Aufsputtern, Platinierung, etc., in dünner Schicht aufgebracht. Die leitfähigen Polymerfilme werden durch Techniken wie Spincoaten, Casing, Rakeln etc. aus der Lösung aufgebracht.

Die Dicke der transparenten Elektrode beträgt 50 Å bis etwa mehrere µm, vorzugsweise 100 Å bis 5 000 Å.

Die Polymeren, z.B. mit Distyryleinheiten der Formel (I) als elektrolumineszierende Substanz, werden auf die transparente Elektrode als dünner Film aufgebracht. Die Dicke des Films beträgt 30 Å bis 10 µm, vorzugsweise 50 Å bis 1 µm.

Nach dem Trocknen der EL-Schicht wird diese mit einer Gegenelektrode ausgerüstet. Diese besteht aus einer leitfähigen Substanz, die transparent sein kann. Vorzugsweise eignen sich Metalle, z.B. Al, Au, Ag, etc. oder Legierungen und Oxide dieser, die durch Techniken wie Aufdampfen, Aufsputtern, Platinierung aufgebracht werden können.

Die erfindungsgemäße Anordnung wird durch zwei elektrische Zuführungen (z.B. Metalldrähte) mit den beiden Elektroden in Kontakt gebracht.

Die Anordnungen emittieren beim Anlegen einer Gleichspannung im Bereich von 0,1 bis 100 Volt Licht der Wellenlänge von 200 bis 2 000 nm. Sie zeigen im Bereich von 200 bis 2 000 nm Photolumineszenz.

Die elektrolumineszierende Schicht kann eine oder mehrere Polymere mit Distyryleinheiten der Formel (I) enthalten. Sie enthält gegebenenfalls weiterhin übliche Zusätze wie inerte Binder, ladungsträgertransportierende Substanzen, Mischungen aus inerten Bindern und ladungsträgertransportierenden Substanzen. Als inerte Binder werden vorzugsweise lösliche transparente Polymere, z.B. Polycarbonate, Polystyrol und Copolymere des Polystyrols wie SAN, Polysulfone, Polyacrylate, Polyvinylcarbazol, Vinylacetat- und Vinylalkoholpolymere und -copolymere usw. eingesetzt.

Zwischen den elektrolumineszierenden Systemen und den Elektroden können zusätzlich eine oder mehrere Zwischenschichten angeordnet sein. Diese Zwischenschichten sind bekannt (z.B. aus Appl. Phys. Lett. 57 (1990) 531) und werden dort als HTL (hole transport layer) und als ETL (electron transport layer) bezeichnet. Diese Zwischenschichten erhöhen die Elektrolumineszenzintensität.

Die erfindungsgemäßen Anordnungen können z.B. zur Herstellung von Leuchtanzeigen (displays), auch in großen Formaten, verwendet werden.

### A) Herstellungbeispiele der eingesetzten Polymeren

### 1) Die Herstellung der Distyrylderivate erfolgt entsprechend bekannten Synethesemethoden.

In einer Horner-Emmons-Reaktion werden die jeweiligen Phosphonate mit aromatischen Aldehyden umgesetzt.

### Herstellung von Distyryl 1

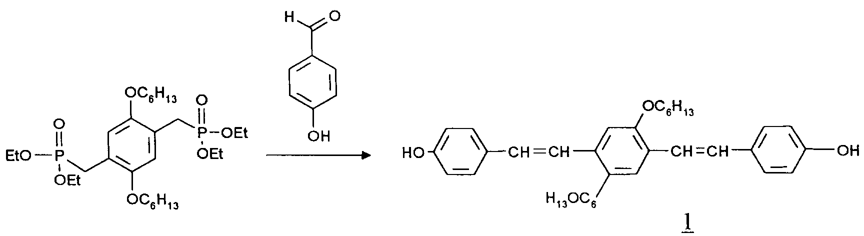

115,8 g des Umsetzungsproduktes aus 2,5 Di-n-hexyloxy 1,4-Dichlormethylbenzol und Triethylphosphit werden in 520 ml DMF und 8 ml Isopropanol vorgelegt. Zu dieser Lösung werden 40,6 g Natriumhydrid (60 %ig) portionsweise zugegeben. Man läßt 7 Stunden bei Raumtemperatur nachrühren, tropft bei 0 - 5°C 50,1 g p-Hydroxybenzaldehyd in 50 ml DMF zu und rührt eine Stunde bei dieser und 16 Stunden bei Raumtemperatur nach.

Es werden nacheinander 120 ml Methanol und 80 ml Wasser zugetropft und der Ansatz mit Salzsäure auf einen pH-Wert von 2 eingestellt. Es wird 2 Stunden bei 80° - 90°C nachgerührt und die Reaktionslösung filtriert. Das Filtrat wird nach Einengen auf etwa 400 ml in 3 l Wasser eingerührt. Nach Zugabe von 2 l Methylenchlorid wird die organische Phase abgetrennt, elektrolytfrei gewaschen, eingeengt und der Rückstand durch Säulenchromatographie (Laufmittel Toluol/Ethylacetat 10/1) gereinigt Ausbeute 43 g eines gelb-orangen Festkörpers mit einem Schmelzpunkt von 186° - 187°C.

### A2) Polyester aus der Distyrylverbindung 1

5,15 g der Distyrylverbindung 1, 1,98 g Pyridin und 200 ml Methylenchlorid werden auf 0°C gekühlt. Zu dieser Lösung läßt man bei 0° - 5°C 2,44 g Sebacoylchlorid in 30 ml Methylenchlorid zutropfen, rührt 1 Stunde nach und läßt auf Raumtemperatur erwärmen. Zur Isolierung des Produktes wird mit Salzsäure angesäuert, die organische Phase mit Wasser elektrolytfrei gewaschen, eingeengt und getrocknet.
- Ausbeute: : 6,7 g eines gelben Polymers.

### A3) Aromatische Polyether aus der Distyrylverbindung 1

Durch nukleophile aromatische Substitution wird aus 5,15 g 1 und 3,02 g 4,4'-Dichloridiphenylsulfon in DMSO/Chlorbenzol und NaOH als Base nach bekanntem Verfahren ein Polysulfon hergestellt.
- Ausbeute:: 4,2 g eines braunen Pulvers.

Durch Austausch von 4,4'-Dichloridiphenylsulfon gegen 1,7 g 2,6-Dichlorbenzonitril wird aus analoge Weise ein Polycyanarylether erhalten.
- Ausbeute:: 5,3 g Polymer.

### A4) Aliphatisch-aromatische Polyether aus Distyrylverbindung 1

Zu 3,93 g KOH-Pulver in 200 ml DMSO werden 5,15 g der Distyrylverbindung 1 gegeben. Zu der Lösung werden 2,44 g 1,6-Dibromhexan in 20 ml DMSO getropft. Man läßt 30 min nachrühren, gießt das Reaktionsgemisch in 1 l Wasser und säuert mit konz. HCl an. Es wird mehrfach mit Methylenchlorid extrahiert, die organische Phase elektrolytfrei gewaschen, eingeengt und im Vakuumtrockenschrank bei 80°C getrocknet.
- Ausbeute:: 5,5 g Polymer.

Alle Polyether weisen lumineszierende Eigenschaften aus.

### A5) Polycarbonate

### 1. Copolycarbonat aus

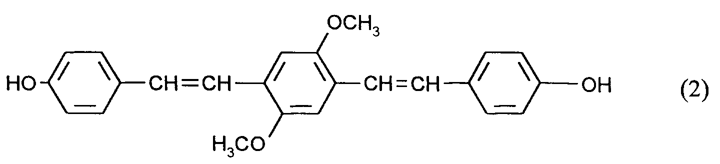

**und BPA**

Gemäß dem Verfahren DE-A 3 832 396 wurden Polycarbonate entsprechend der in Tabelle 1 angegebenen Mol-Teilen aus BPA und dem Dimethoxydistyrylderivat (1) hergestellt:

**Tabelle 1**

| Beispiel | BPA | (1) |
|---|---|---|
| 1 | 3 | 1 |
| 2 | 4 | 1 |

Es werden gelbe Polycarbonate erhalten, die lumineszierende Eigenschaften aufweisen.

### A6) Copolysulfone und Polyetherketone aus

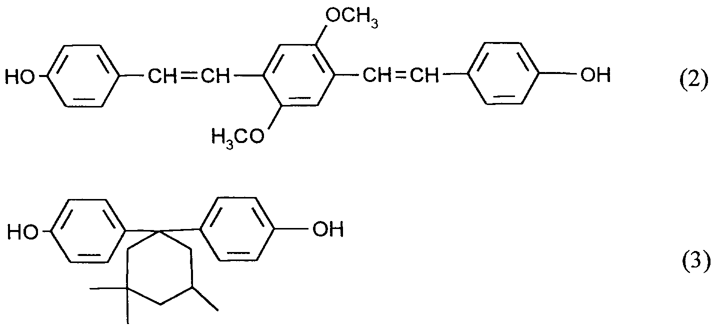

**sowie 4,4'-Dichloridiphenylsulfon bzw. Difluorbenzophenon**

Gemäß dem in US-5086157 oder 5198525 angegebenen Verfahren werden Polysulfone entsprechend der in Tabelle 2 angegebenen Mol-Teile hergestellt.

**Tabelle 2**

| Beispiel | (2) | (3) | Dichlordiphenylsulfon | Difluorbenzophenon |
|---|---|---|---|---|
| 1 | 1 | 3 | 4 | - |
| 2 | 1 | 1 | 2 | - |
| 3 | 1 | 1 | - | 2 |
| Auf analoge Weise wurden Polyether aus (1) und Dichlorbenzonitril gewonnen. | | | | |

| Beispiel | (1) | (2) | 2,6-Dichlorbenzonitril | |
|---|---|---|---|---|
| 1 | 1 | 3 | 4 | |
| 2 | 1 | 1 | 2 | |

Es werden in allen Beispielen gelbe aromatische Polyether erhalten, die lumineszierende Eigenschaften aufweisen.

### A7) Polyester mit Distyryleinheiten

Aus 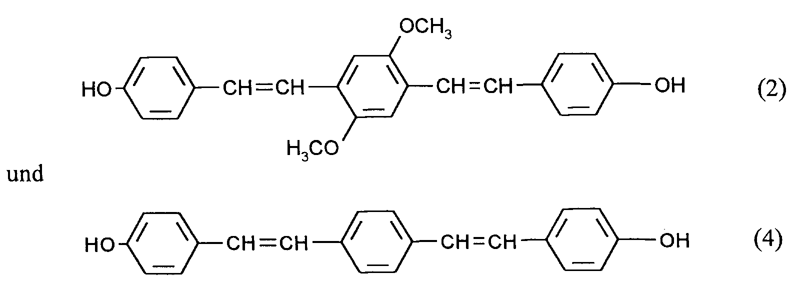
werden mit verschiedenen Säuredichloriden Polyester gewonnen. Dazu wurden die Bisphenole gelöst und mit den Säuredichloriden in Gegenwart von Pyridin eingesetzt. In Tabelle 3 sind die jeweiligen Mol-Verhältnisse angegeben.

**Tabelle 3**

| Beispiel | (2) | (4) | Isophthalsäuredichlorid | Sebacinsäuredichlorid |
|---|---|---|---|---|
| 1 | - | 1 | 1 | - |
| 2 | - | 1 | - | 1 |
| 3 | 1 | - | 1 | - |
| 4 | 1 | - | - | 1 |

Es werden gelbe Polyester erhalten, die lumineszierende Eigenschaften aufweisen.

### B) Elektrolumineszierende Anordnung I

ITO beschichtetes Glas (hergestellt von der Firma Balzers) wird in 20 x 30 mm große Stücke geschnitten und in folgenden Schritten gereinigt:
1. 15 min in dest. Wasser/Falterol-Spülmittel (basisch) im Ultraschallbad,
2. 2 x 15 min in jeweils frischem dest. Wasser im Ultraschallbad spülen,
3. 15 min in Ethanol im Ultraschallbad,
4. 2 x 15 min in jeweils frischem Aceton im Ultraschallbad,
5. Trocknen auf fusselfreien Linsentüchern.

Es wird eine 1 %ige Lösung des Polyethers aus Beispiel A4) in Dichlorethan hergestellt. Die Lösung wird gefiltert (0,2 µm-Filter). Die gefilterte Lösung wird mit einer Lackschleuder bei 500 U/min auf dem ITO-Glas verteilt. Die Dicke des trockenen Films beträgt 120 nm und der Ra-Wert der Oberfläche beträgt 5 nm (Stylusprofilometer Alpha-Step 200 der Firma Tencor Inst.).

Der so hergestellte Film wird anschließend mit Al-Elektroden bedampft. Dazu werden mit Hilfe einer Lochmaske isolierte Al-Punkte mit einem Durchmesser von 3 mm auf den Film gedampft. Während des Aufdampfens herrscht in einer Aufdampfapparatur ein Druck p < 10-5 mbar.

Die ITO-Schicht und die Al-Elektrode wird über elektrische Zuführungen mit einer Spannungsquelle verbunden. Beim Erhöhen der Spannung fließt ein elektrischer Strom durch die Anordnung und die beschriebene Schicht elektroluminesziert. Die Elektrolumineszenz tritt dabei unabhängig von der Polung der angelegten Spannung auf.

Die Leuchtdichte der Elektrolumineszenz beträgt bei 17 Volt 10 cd/m² (Minolta, LS 100).

### Elektrolumineszierende Anordnung II

Gemäß Herstellung der elektrolumineszierenden Anordnung I wurde eine Dichlorethanlösung mit 0,5 Gew.-Teilen an Polystyrol und 0,5 Gew.-Teilen des Polyethers aus Beispiel A4) zur Erzeugung der elektrolumineszierenden Schicht eingesetzt.

Die Leuchtdichte der Elektrolumineszenz beträgt bei 25 Volt 1 cd/m².

### Elektrolumineszierende Anordnung III

Gemäß Herstellung der elektrolumineszierende Anordnung I wurde eine Dichlorethanlösung mit 0,5 Gew.-Teilen an Poly(9-vinylcarbazol) (Al-Dichte 18,260) und 0,5 Gew.-Teilen des Polyethers aus Beispiel A4) zur Erzeugung der elektrolumineszierende Schicht eingesetzt.

Die Leuchtdichte der Elektrolumineszenz beträgt bei 20 Volt 1,5 cd/m².

### Elektrolumineszierende Anordnung IV

Gemäß Herstellung der elektrolumineszierende Anordnung I wurde eine Dichlorethanlösung mit 1 Gew.-Teil des Polycyanarylethers aus Beispiel A6) zur Erzeugung der elektrolumineszierende Schicht eingesetzt.

Die Leuchtdichte der Elektrolumineszenz beträgt bei 30 Volt 0,1 cd/m².

## Patentansprüche

1. Polymere und/oder Copolymere mit wiederkehrenden Einheiten der Formel (I) 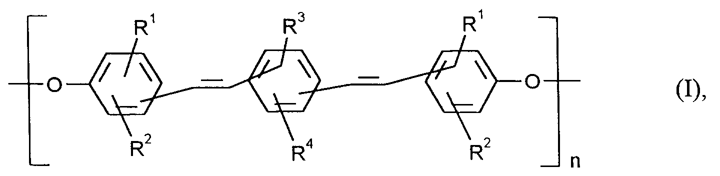 wobei diese Einheiten verknüpft sind über Ester-, Ether-, Carbonat-oder Urethangruppen, und
R¹ bis R⁴ gleich oder verschieden sind und für Wasserstoff, Halogen, C₁₋₃₀-Alkyl, C₆₋₁₈-Aryl, C₆₋₂₄-Aralkyl, C₆₋₂₄-Aryloxy-S-C₁₋₃₀-Alkyl, -NH-C₁₋₃₀-Alkyl, N-C₁₋₃₀-Dialkyl, NO₂, CN stehen und zusätzlich R¹ und R² unabhängig voneinander für C₂-C₃₀-Alkoxy, R³ und R⁴ für C₁-C₃₀-Alkoxy stehen können und
n für eine Zahl von 1 bis 500 steht.

2. Polymere und/oder Copolymere mit wiederkehrenden Einheiten der Formel (II) 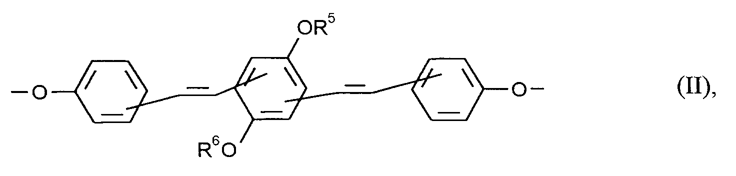 in welcher
R⁵ und R⁶ unabhängig voneinander für Methyl, Ethyl, (i)Propyl, (i)Butyl, (i)Pentyl, (i)Hexyl, (i)Heptyl, (i)Octyl, 2-Ethylhexyl, (i)Decyl, (i)Dodecyl, Myristyl, Cetyl, Stearyl, Phenyl, Benzyl, C₁-C₃₀-Alkylphenyl stehen.

3. Polymere nach Anspruch 1, dadurch gekennzeichnet, daß die Struktureinheit der Formel (I) zum Aufbau von Polycarbonaten dient.

4. Polymere nach Anspruch 1, dadurch gekennzeichnet, daß die Struktureinheit der Formel (I) zum Aufbau von Polyestern dient.

5. Polymere nach Anspruch 1, dadurch gekennzeichnet, daß die Struktureinheit der Formel (I) zum Aufbau aromatischer Polyether dient.

6. Polymere nach Anspruch 1, dadurch gekennzeichnet, daß die Struktureinheit der Formel (I) zum Aufbau aromatisch-aliphatischer Polyether dient.

7. Polymere nach Anspruch 1, dadurch gekennzeichnet, daß es sich bei den aromatischen Polyethern aus Anspruch 4 um Polysulfone, Polyetherketone oder Polycyanoarylether handelt.

8. Verwendung der Polymere gemäß Anspruch 1 zur Herstellung elektrolumineszierender Gegenstände.
